# EUROPEAN PATENT SPECIFICATION

(11) **EP 3 978 292 B1**
(45) Date of publication and mention of the grant of the patent: **31.05.2023**
(21) Application number: 21189668.3
(22) Date of filing: 04.08.2021
(51) Int. Cl.: B60K 35/00, B60K 37/02, B60K 37/04

(54) **DISPLAY SYSTEM**
ANZEIGESYSTEM
SYSTÈME D'AFFICHAGE

(30) Priority: 30.09.2020 JP 2020166172
(43) Date of publication of application: 06.04.2022
(73) Proprietor: Yamaha Hatsudoki Kabushiki Kaisha, Iwata-shi, Shizuoka 438-8501 (JP)
(72) Inventor: Sugiyama, Yuichi, Iwata-shi (JP)
(74) Representative: Grünecker Patent- und Rechtsanwälte PartG mbB

(56) References cited:
- EP-A1- 3 357 735
- EP-B1- 1 764 295
- WO-A1-2006/130199
- DE-B4- 10 013 930
- US-A1- 2019 250 006

## Description

The present invention relates to a display system according to the preamble of independent claim 1, a straddled vehicle having a display system and a display means comprising a display system and a portable terminal. Such a display system can be taken from the prior art document US 2019/0250006 A1.

JP-A-7-277035 discloses a meter module in which various meters such as a speedometer and indicators are mounted on one and the same centralized control board.

Various in-vehicle products such as a speedometer, indicators, and an infotainment display device may be mounted on a straddled vehicle. When these in-vehicle products are mounted on one and the same board to form a meter module as in the meter module according to JP-A-7-277035, the in-vehicle products required for one straddled vehicle differ from the in-vehicle products required for another straddled vehicle, and the layout required for one straddled vehicle also differs from the layout required for another straddled vehicle. Accordingly, the meter module is newly designed according to each straddled vehicle. Therefore, the background-art meter module has a small degree of freedom for selection and placement of the in-vehicle products. Further, when, for example, a part of the in-vehicle products mounted on the board are broken, not the broken in-vehicle products but the meter module needs to be repaired or replaced. In these respects, the background-art meter module still has room for improvement.

An object of the present invention is to provide a display system that has a high degree of freedom for design and high maintainability while being provided with a plurality of independent and separate units with functions made different from one another. According to the present invention said object is solved by a display system having the features of independent claim 1. Preferred embodiments are laid down in the dependent claims.

Accordingly, it has examined a method for mounting a meter display device, indicators, and an infotainment display device on a straddled vehicle while achieving a high degree of freedom for design and high maintainability. Then, there is an idea that the meter display device, the indicators and the infotainment display device can be mounted on the straddled vehicle without being modularized if they are physically connected to one another through signal cables.

According to one or more aspects of the present invention, there is provided a display system to be mounted on a straddled vehicle and communicably connected to a portable terminal.

The display system comprises:
an indicator unit comprising a plurality of indicators indicating a state of the vehicle;
a meter display unit configured to display vehicle traveling information relevant to a traveling state of the vehicle; and
an infotainment display unit communicably connected to the portable terminal and that displays infotainment information transmitted from the portable terminal.

Each of the indicator unit, the meter display unit and the infotainment display unit is an independent and separate unit.

The indicator unit and the meter display unit are physically connected to each other through a first signal cable.

The meter display unit and the infotainment display unit are physically connected to each other through a second signal cable.

According to the aforementioned configuration, the indicator unit, the meter display unit, and the infotainment display unit are independent and separate units. The display system is constructed by combining the separately manufactured units. Further, the indicator unit and the meter display unit are physically connected to each other through the first signal cable, and the meter display unit and the infotainment display unit are physically connected to each other through the second signal cable. In this manner, the indicator unit, the meter display unit, and the infotainment display unit, that are separate units, are connected to each other through the signal cables. Therefore, the placement positions of the units can be determined relatively freely. Thus, the display system according to the aforementioned configuration has a higher degree of freedom for design (degree of freedom for layout) than the background-art meter module. Further, when a part of these units are broken, only the broken units need to be replaced or repaired. Consequently, maintainability of such a display system is also high.

Thus, according to the aforementioned configuration, it is possible to provide a display system that has a high degree of freedom for design and high maintainability while being provided with a plurality of independent and separate units with functions made different from one another.

The indicator unit comprises:
a first board on which at least the plurality of indicators are mounted; and
a first housing portion covering at least the first board.

The meter display unit may comprise:
a meter display portion configured to display the vehicle traveling information;
a second board on which at least the meter display portion is mounted; and
a second housing portion covering at least the second board.

The infotainment display unit may comprise:
an infotainment display portion configured to display infotainment information;
a third board on which at least the infotainment display portion is mounted; and
a third housing covering at least the third board.

The indicator unit comprises the first board on which the plurality of indicators are mounted, and the first housing portion covering at least the first board. The meter display unit comprises the second board on which the meter display portion is mounted, and the second housing portion covering at least the second board. The infotainment display unit comprises the third board on which the infotainment display portion is mounted, and the third housing portion covering at least the third board. In this manner, the indicator unit, the meter display unit, and the infotainment display unit, each of which has the corresponding separate board and the corresponding separate housing portion, are independent of one another. Further, each of the units is unitized as a separate unit by the corresponding housing portion. Since the display system according to the aforementioned configuration is constructed by freely combining these units, the display system has a high degree of freedom for design and high maintainability.

The first signal cable may be an LIN communication cable.

The first signal cable is an LIN communication cable. Accordingly, it is possible to simplify the cable required for communication between the meter display unit and the indicator unit, for example, as compared with a case where the first signal cable is a CAN communication cable.

The indicator unit may further comprise an indicator controller configured to control the plurality of indicators.

The indicator unit comprises the indicator controller configured to control the plurality of indicators. Therefore, the meter display unit needs to have a function of controlling the meter display portion, but does not need to have a function of controlling the plurality of indicators. Therefore, by adopting the aforementioned configuration, independence of the meter display unit and the indicator unit can be enhanced.

The meter display unit may comprise:
a meter display portion; and
a meter display controller configured to control operation of the meter display portion and the plurality of indicators.

The meter display unit comprises the meter display controller configured to control the operation of the meter display portion, and the plurality of indicators. Accordingly, the indicator unit does not need to have the function of controlling the plurality of indicators. Consequently, the configuration of the indicator unit can be further simplified.

### BRIEF DESCRIPTION OF DRAWINGS

FIG. 1 is a view illustrating a front portion of a straddled vehicle provided with a display system according to the present invention.
FIG. 2 is a system configuration diagram of the straddled vehicle including the display system according to the present invention.
FIG. 3 is a schematic view of an internal structure of the display system according to the present invention.

### DETAILED DESCRIPTION OF EMBODIMENT

An embodiment of the present invention will be described below with reference to the drawings. Dimensions of each member shown in the drawings may differ from actual dimensions of the member for convenience of explanation.

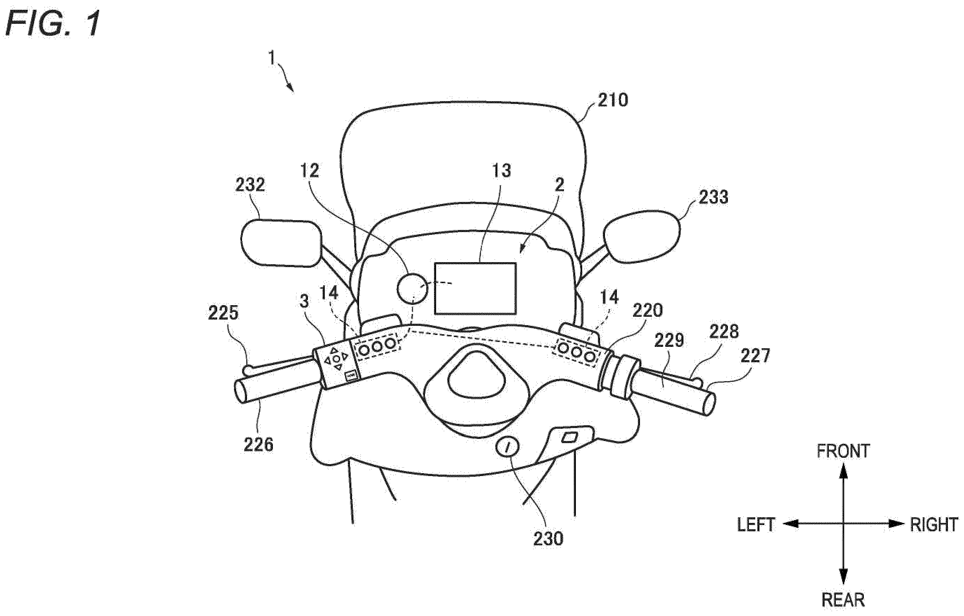

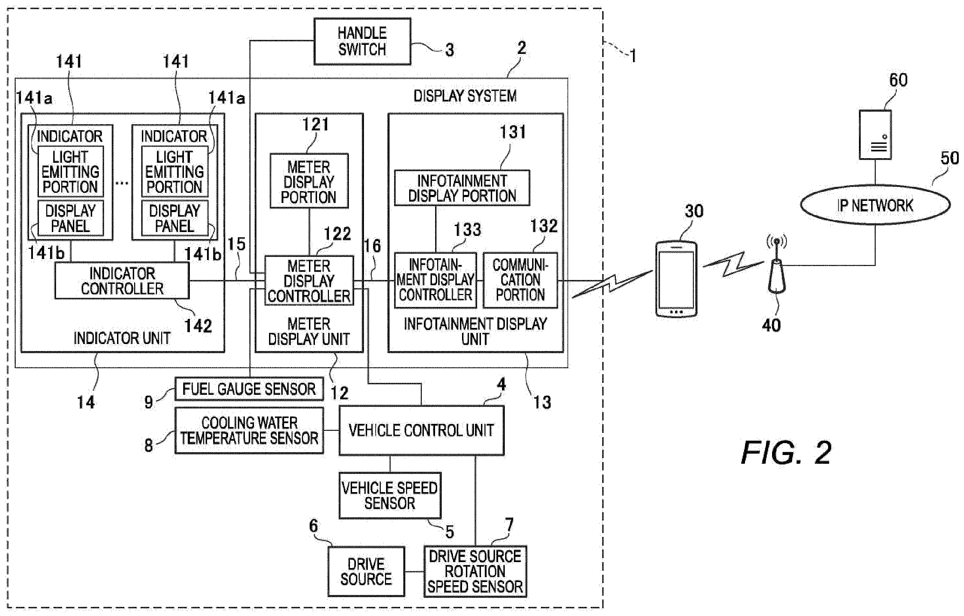

First, the configuration of a straddled vehicle 1 (hereinafter simply referred to as vehicle 1) including a display system 2 according to the present embodiment will be described below with reference to FIG. 1 and FIG. 2. FIG. 1 is a view illustrating a front portion of the vehicle 1 including the display system 2. FIG. 2 is a system configuration diagram of the vehicle 1 including the display system 2.

As illustrated in FIG. 1, the vehicle 1 is, for example, a motorcycle that can be turned by a driver tilting a vehicle body of the motorcycle. The display system 2 including a meter display unit 12 for presenting vehicle traveling information of the vehicle 1 to the driver, an infotainment display unit 13 for presenting infotainment information, and indicator units 14 for presenting vehicle state information of the vehicle 1 to the driver is provided in the vehicle 1. The vehicle traveling information is information relevant to a traveling state of the vehicle 1 (such as speed information of the vehicle 1), the infotainment information is road traffic information or the like, and the vehicle state information is information indicating the state of the vehicle 1 (such as a state of an engine mounted on the vehicle 1). The meter display unit 12 and the infotainment display unit 13 are provided between a windscreen 210 and a handle 220 in a front-rear direction of the vehicle 1, and provided between a left side mirror 232 and a right side mirror 233 in a left-right direction of the vehicle 1. The indicator units 14 are provided respectively in left and right regions on the handle 220, and provided between the left side mirror 232 and the right side mirror 233 in the left-right direction of the vehicle 1. The indicator units 14 may be provided in a fuel tank placed behind the handle 220.

The handle 220 has a left handle 226 and a right handle 227. A handle switch 3 and a brake lever 225 are provided on the left handle 226. A throttle grip 229 functioning as an accelerator and a brake lever 228 are provided on the right handle 227. A main switch key 230 for turning ON or OFF drive of the vehicle 1 is provided under the handle 220.

In FIG. 1, the vehicle 1 is illustrated as a scooter type motorcycle. However, the type of the vehicle 1 is not limited to the scooter. The vehicle 1 may be any other type motorcycle than the scooter. Further, the vehicle 1 is not limited to a two-wheeled vehicle but may be a straddled three-wheeled vehicle or four-wheeled vehicle.

Next, the system configuration diagram of the vehicle 1 will be described below with reference to FIG. 2. Only a part of constituent elements constituting the vehicle 1 are shown for convenience of explanation in FIG. 2. As illustrated in FIG. 2, the vehicle 1 includes the display system 2, the handle switch 3, a vehicle control unit 4, a vehicle speed sensor 5, a drive source 6, a drive source rotation speed sensor 7, a cooling water temperature sensor 8, and a fuel gauge sensor 9.

The display system 2 is configured to display vehicle traveling information of the vehicle 1 on the meter display unit 12 after receiving the traveling information data of the vehicle 1 from the vehicle control unit 4. Further, the display system 2 is configured to display infotainment information on the infotainment display unit 13 after receiving the infotainment information from a portable terminal 30 carried by the driver. Further, the display system 2 may be configured to transmit, to the portable terminal 30, the traveling information data of the vehicle 1 transmitted from the vehicle control unit 4. Further, the display system 2 is also configured to display vehicle state information on the indicator units 14 based on the traveling information data of the vehicle 1 received from the vehicle control unit 4, an operation signal received from the handle switch 3 which will be described later, a detection signal received from the fuel gauge sensor, etc.

The display system 2 includes the meter display unit 12, the infotainment display unit 13, and the indicator units 14. The meter display unit 12, the infotainment display unit 13, and the indicator units 14 are independent and separate units respectively to be separated from one another. The meter display unit 12 and each of the indicator units 14 are electrically connected to each other through a first signal cable 15. The meter display unit 12 and the infotainment display unit 13 are electrically connected to each other through a second signal cable 16. In the present embodiment, the display system 2 includes two indicator units 14 as described above. However, in FIG. 2, only one indicator unit 14 is shown for convenience of explanation.

As illustrated in FIG. 2, the meter display unit 12 includes a meter display portion 121 and a meter display controller 122. The meter display unit 12 is configured to display, on the meter display portion 121, a meter display picture indicating a traveling state of the vehicle 1 (such as speed or mileage of the vehicle 1). The meter display portion 121 is constituted by, for example, a digital display such as a liquid crystal display or an organic EL display, or an analog display that displays a measurement value by a pointer.

The meter display controller 122 is configured to control the meter display portion 121. The meter display controller 122 includes a computer system including at least one processor and at least one memory, and an electronic circuit constituted by active elements and passive elements. The processor includes, for example, at least one of a CPU (Central Processing Unit), an MPU (Micro Processing Unit), and a GPU (Graphics Processing Unit). The memory includes an ROM (Read Only Memory) and an RAM (Random Access Memory). The RAM may include a VRAM (Video RAM). The ROM may include a flash memory. The processor may be configured to expand a control program stored in the ROM on the RAM and execute various processes in cooperation with the RAM. Further, the computer system may include an ASIC (Application Specific Integrated Circuit) or an FPGA (Field-Programmable Gate Array). For example, the meter display controller 122 displays the meter display picture indicating the vehicle traveling information on the meter display portion 121 after receiving the vehicle traveling information of the vehicle 1 from the vehicle control unit 4. Further, the meter display controller 122 can also transmit the vehicle traveling information of the vehicle 1 to the infotainment display unit 13.

The meter display controller 122 can also determine a current value to be supplied to the indicator unit 14. Further, the meter display controller 122 can also generate vehicle state information based on various information (such as the traveling information data) received from at least one of the handle switch 3, the vehicle control unit 4, and the fuel gauge sensor 9. The generated vehicle state information is transmitted to the indicator unit 14. Further, the meter display controller 122 can also generate a control signal for controlling the indicator unit 14 based on the various information (such as the traveling information data). In this case, the generated control signal is transmitted to the indicator unit 14.

The infotainment display unit 13 includes an infotainment display portion 131, a communication portion 132, and an infotainment display controller 133. The infotainment display unit 13 is configured to display, on the infotainment display portion 131, infotainment information transmitted from the portable terminal 30. The infotainment display portion 131 is constituted by, for example, a liquid crystal display or an organic EL display.

The communication portion 132 is communicably connected to the portable terminal 30. The communication portion 132 may be configured, for example, as a wireless communication module communicably connected to the portable terminal 30 by wireless. The wireless communication module that has a high frequency circuit (RF circuit) and a transmission/reception antenna may be connected to the portable terminal 30 based on a wireless communication standard such as Wi-Fi (registered trademark) or Bluetooth (registered trademark). Further, the communication portion 132 may be communicably connected to the portable terminal 30 through a wired cable such as a USB cable. In this case, the communication portion 132 can be connected to the portable terminal 30 based on a standard such as SDL (Smart Device Link: registered trademark).

The infotainment display controller 133 is configured to control each of the constituent elements provided in the infotainment display unit 13. The infotainment display controller 133 may be provided with a computer system and an electronic circuit that are similar in hardware configuration to those of the meter display controller 122. For example, the infotainment display controller 133 displays infotainment information on the infotainment display portion 131 after receiving the infotainment information from the portable terminal 30. Further, the infotainment display controller 133 is electrically connected to the meter display controller 122 of the meter display unit 12 through the second signal cable 16. When the infotainment display unit 13 receives vehicle traveling information of the vehicle 1 from the meter display controller 122, the infotainment display controller 133 can display the vehicle traveling information of the vehicle 1 or the vehicle traveling information of the vehicle 1 and the infotainment information on the infotainment display portion 131.

The indicator unit 14 includes a plurality of indicators 141 and an indicator controller 142. Each of the indicators 141 includes a light emitting portion 141a and a display panel 141b. The indicator 141 is configured to display vehicle state information. The vehicle state information may include a plurality of warnings to the driver of the vehicle 1. In the present embodiment, the indicator 141 may function as an engine warning lamp for notifying the driver of the vehicle 1 of a failure of an FI (Fuel Injection) system, a direction instruction display lamp for notifying the driver of the vehicle 1 of a planned traveling direction of the vehicle 1, a water temperature warning lamp for notifying the driver of the vehicle 1 of a fact that temperature of cooling water has exceeded a predetermined temperature, an ABS warning lamp for notifying the driver of the vehicle 1 of a failure of an ABS function, a high beam warning lamp for notifying the driver of the vehicle 1 of a fact that high beams are radiated, or the like.

The light emitting portion 141a includes a light emitting element such as a light bulb or a light emitting diode (LED). The light emitting portion 141a is configured to emit light emitted from the light emitting element toward the outside of the indicator unit 14.

The display panel 141b that is formed out of a translucent material such as an acrylic resin, a polycarbonate resin or glass through which light can be transmitted is configured to transmit light emitted from the light emitting portion 141a. When the light emitted from the light emitting portion 141a is transmitted through the display panel 141b, brightness of the display panel 141b is higher than brightness around the display panel 141b.

The indicator controller 142 is configured to control each of the constituent elements provided in the indicator unit 14. The indicator controller 142 may be provided with a computer system and an electronic circuit which are similar in configuration to those of the meter display controller 122. Upon reception of vehicle state information or a control signal from the meter display controller 122, the indicator controller 142 controls ON/OFF of the plurality of light emitting portions 141a based on the received vehicle state information or control signal.

The portable terminal 30 is, for example, a smartphone, a cellphone, a tablet or a wearable device. The portable terminal 30 is communicably connected to a wireless base station 40 by wireless. In this respect, the portable terminal 30 may include an SIM card for data communication, and may be communicably connected to the wireless base station 40 through a 4th generation (4G) or 5th generation (5G) mobile communication system. The portable terminal 30 is connected to an external server 60 through the wireless base station 40, a core network (not shown) for portable terminals, and an IP (Internet Protocol) network 50. For example, the portable terminal 30 may transmit infotainment information (map information, musical information, message information, weather information, etc.) to the communication portion 132 of the infotainment display unit 13 after receiving the infotainment information from the external server 60. On the other hand, the portable terminal 30 may transmit vehicle traveling information of the vehicle 1 to the external server 60 after receiving the vehicle traveling information of the vehicle 1 from the communication portion 132. Further, the portable terminal 30 may be provided with a GPS (Global Positioning System) device that receives current position information of the portable terminal 30. The portable terminal 30 may transmit, to the communication portion 132, the map information received from the external server 60 and the current position information acquired by the GPS device.

The handle switch 3 is provided on the left handle 226 (see FIG. 1). The handle switch 3 is configured to transmit an operation signal to the meter display controller 122 through the communication cable after generating the operation signal in accordance with an operation of the driver. The operation signal may be an analog signal or a digital signal.

The vehicle control unit 4 is configured to control traveling of the vehicle 1. In particular, the vehicle control unit 4 is configured to control the drive source 6 based on an accelerator operation signal or a brake operation signal outputted from an HMI (Human Machine Interface) of, for example, the throttle grip or one of the brake levers. The vehicle control unit 4 is composed of, for example, at least one electronic control unit (ECU). The ECU may include a computer system including at least one processor and at least one memory, and an electronic circuit constituted by active elements and passive elements. The vehicle control unit 4 is configured to transmit a detection signal outputted from any of various sensors provided in the vehicle 1 to the meter display controller 122 through a CAN (Control Area Network) communication cable.

The vehicle speed sensor 5 is configured to detect speed of the vehicle 1 and transmit a detection signal indicating the speed of the vehicle 1 to the vehicle control unit 4. The drive source rotation speed sensor 7 is configured to detect rotation speed of the drive source 6 and transmit a detection signal indicating the rotation speed of the drive source 6 to the vehicle control unit 4. The drive source 6 that is configured to generate driving force of the vehicle 1 is an engine and/or a motor.

The cooling water temperature sensor 8 is configured to detect temperature of the cooling water cooling the drive source 6 and transmit a detection signal indicating the temperature of the cooling water to the vehicle control unit 4. In a case where the drive source 6 is not a water-cooled engine, the cooling water temperature sensor 8 does not need to be provided in the vehicle 1. In this case, an engine temperature sensor that is configured to detect engine temperature may be provided in the vehicle 1 in place of the cooling water temperature sensor 8. The fuel gauge sensor 9 is configured to detect a remaining amount of fuel (such as a remaining amount of gasoline) of the drive source 6 and transmit a detection signal indicating the remaining amount of the fuel to the meter display controller 122 through the CAN communication cable. Further, the fuel gauge sensor 9 may be configured to transmit the detection signal indicating the remaining amount of the fuel to the vehicle control unit 4. When the drive source 6 is a motor, a remaining battery level sensor that detects a remaining battery level may be provided in the vehicle 1 in place of the fuel gauge sensor 9.

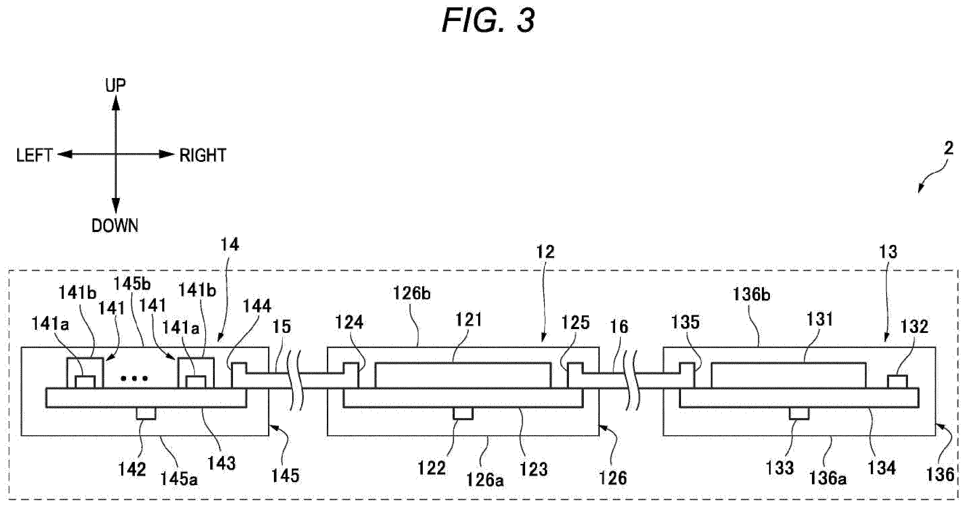

Next, an internal structure of the display system 2 will be described with reference to FIG. 3. FIG. 3 is a schematic view of the internal structure of the display system 2.

As illustrated in FIG. 3, the meter display unit 12 includes a second board 123, a first adapter 124, a second adapter 125, and a second housing portion 126. The second board 123 is a flat plate-like rigid board having a substantially rectangular outer shape. The second board 123 has a rigid insulator, a circuit pattern, and a ground circuit, and at least one electronic component which has been electrically connected to the circuit pattern may be mounted on the second board 123. The meter display portion 121, the first adapter 124, and the second adapter 125 are mounted on an upper portion of the second board 123. The meter display portion 121 is placed in a region including a central portion of the second board 123. The first adapter 124 is provided on a left end portion of the second board 123. The second adapter 125 is provided on a right end portion of the second board 123. The meter display controller 122 is mounted on a lower portion of the second board 123. However, the meter display controller 122 may be mounted on the upper portion of the second board 123. Further, any other electronic component than these electronic components may be mounted on the second board 123. Examples of the other electronic component include a capacitor, an integrated circuit, a Hall IC (Integrated Circuits), a coil, a resistor, etc.

The first adapter 124 has a terminal into which a connector (not shown) of the first signal cable 15 can be inserted. Further, the second adapter 125 has a terminal into which a connector (not shown) of the second signal cable 16 can be inserted. In the present embodiment, the connector of the first signal cable 15 is inserted into the terminal of the first adapter 124, and the connector of the second signal cable 16 is inserted into the terminal of the second adapter 125.

The second housing portion 126 that is a box-like member having a substantially rectangular parallelepiped outer shape is disposed to cover the meter display portion 121, the meter display controller 122, the second board 123, the first adapter 124, and the second adapter 125. The second housing portion 126 includes a non-transparent portion 126a and a transparent portion 126b. The non-transparent portion 126a that has an opening in its upper surface is formed out of a resin material into a rectangular parallelepiped box-like shape as an outer shape. The opening corresponds to, of the upper surface of the second housing portion 126, a portion including at least a region positioned above the meter display portion 121 in a thickness direction of the second board 123. For example, an acrylate-based resin, an epoxy-based resin, or the like can be used as the resin material. The non-transparent portion 126a is, for example, formed out of a black resin material so that the inside of the non-transparent portion 126a cannot be visually recognized from the outside.

The transparent portion 126b is a plate-like member such as a resin or glass plate, through which light can be transmitted. The transparent portion 126b is disposed to cover the opening belonging to the non-transparent portion 126a. Therefore, the driver of the vehicle 1 can visually recognize information displayed on the meter display portion 121 through the transparent portion 126b.

The infotainment display unit 13 includes a third board 134, a third adapter 135, and a third housing portion 136. The third board 134 may have the same configuration as the second board 123. The infotainment display portion 131, the communication portion 132, and the third adapter 135 are mounted on an upper portion of the third board 134. The infotainment display portion 131 is placed in a region including a central portion of the third board 134. The communication portion 132 is provided on a right end portion of the third board 134. The third adapter 135 is provided on a left end portion of the third board 134. The infotainment display controller 133 is mounted on a lower portion of the third board 134. However, the infotainment display controller 133 may be mounted on the upper portion of the third board 134. Further, any other electronic component than these electronic components may be mounted on the third board 134.

The third adapter 135 has a terminal into which a connector (not shown) of the second signal cable 16 can be inserted. In the present embodiment, the connector of the second signal cable 16 is inserted into the terminal of the third adapter 135. Therefore, the second board 123 and the third board 134 are electrically connected through the second signal cable 16. In other words, the meter display unit 12 and the infotainment display unit 13 are physically connected to each other through the second signal cable 16. In the present embodiment, the second signal cable 16 is a CAN communication cable. However, the second signal cable 16 may be an LVDS (Low Voltage Differential Signaling) communication cable or the like.

The third housing portion 136 that is a box-like member having a substantially rectangular parallelepiped outer shape is disposed to cover the infotainment display portion 131, the communication portion 132, the infotainment display controller 133, the third board 134, and the third adapter 135. The third housing portion 136 includes a non-transparent portion 136a and a transparent portion 136b. The non-transparent portion 136a that has an opening in its upper surface is formed out of the same resin material as that of the non-transparent portion 126a into a rectangular parallelepiped box shape as an outer shape. The opening corresponds to, of the upper surface of the third housing portion 136, a portion including at least a region positioned above the infotainment display portion 131 in a thickness direction of the third board 134.

The transparent portion 136b is a plate-like member such as a resin or glass plate through which light can be transmitted. The transparent portion 136b is disposed to cover the opening belonging to the non-transparent portion 136a. Therefore, the driver of the vehicle 1 can visually recognize information displayed on the infotainment display portion 131 through the transparent portion 136b.

The indicator unit 14 includes a first board 143, a fourth adapter 144, and a first housing portion 145. The first board 143 may have the same configuration as the second board 123. The plurality of indicators 141 and the fourth adapter 144 are mounted on an upper portion of the first board 143. The plurality of indicators 141 are placed side by side at predetermined intervals on the upper portion of the first board 143. The fourth adapter 144 is provided on a right end portion of the first board 143. The indicator controller 142 is mounted on a lower portion of the first board 143. However, the indicator controller 142 may be mounted on the upper portion of the first board 143. Further, any other electronic component other than these electronic components may be mounted on the first board 143.

The fourth adapter 144 has a terminal into which a connector (not shown) of the first signal cable 15 can be inserted. In the present embodiment, the connector of the first signal cable 15 is inserted into the terminal of the fourth adapter 144. Therefore, the first board 143 and the second board 123 are electrically connected through the first signal cable 15. In other words, the meter display unit 12 and the indicator unit 14 are physically connected to each other through the first signal cable 15. The first signal cable 15 is, for example, an LIN (Local Interconnect Network) communication cable.

The first housing portion 145 that is a box-like member having a substantially rectangular parallelepiped outer shape is disposed to cover the plurality of indicators 141, the indicator controller 142, the first board 143, and the fourth adapter 144. The first housing portion 145 includes a non-transparent portion 145a and a transparent portion 145b. The non-transparent portion 145a that has an opening in its upper surface is formed out of the same resin material as that of the non-transparent portion 126a into a rectangular parallelepiped box shape as an outer shape. The opening corresponds to, of the upper surface of the first housing portion 145, a portion including at least a region positioned above the indicators 141 in a thickness direction of the first board 143.

The transparent portion 145b is a plate-like member such as a glass plate, through which light can be transmitted. The transparent portion 145b is disposed to cover the opening belonging to the non-transparent portion 145a. Further, characters, figures, or the like indicating a warning to the driver of the vehicle 1 are drawn on upper surfaces of the display panels 141b. Therefore, when light is emitted from the light emitting portions 141a, the driver of the vehicle 1 can visually recognize vehicle state information including the warning to the driver of the vehicle 1 displayed on the display panels 141b through the transparent portion 145b.

By the way, in-vehicle products such as a meter display device, indicators, and an infotainment display device are often mounted on a straddled vehicle. In the background art, for example, these in-vehicle products are mounted on one and the same board to form a meter module, and the meter module is mounted on the straddled vehicle. In this manner, these in-vehicle products are mounted on the straddled vehicle. In this case, however, the in-vehicle products with which the meter module should be provided differ from one straddled vehicle to another, and the layout required for one straddled vehicle also differs from the layout required for another straddled vehicle. Therefore, the meter module needs to be newly designed according to each straddled vehicle. Accordingly, such a meter module has a small degree of freedom for selection and placement of the in-vehicle products. Further, when, for example, a part of the in-vehicle products mounted on the board are broken, not the broken in-vehicle products but the meter module needs to be repaired or replaced. To solve this problem, there is an idea that the meter display device, the indicators and the infotainment display device can be mounted on the straddled vehicle without being modularized if they are physically connected to one another through signal cables.

According to the display system 2 according to the present embodiment, the indicator unit 14, the meter display unit 12, and the infotainment display unit 13 are independent and separate units respectively, and the display system 2 is constructed by combining the units. Further, the indicator unit 14 and the meter display unit 12 are physically connected to each other through the first signal cable 15, and the meter display unit 12 and the infotainment display unit 13 are physically connected to each other through the second signal cable 16. Therefore, the placement positions of the indicator unit 14, the meter display unit 12, and the infotainment display unit 13 can be determined relatively freely. In this manner, the display system 2 can enhance the degree of freedom for design (the degree of freedom for layout). Further, when a part of these units are broken, only the broken units need to be replaced or repaired. Accordingly, the display system 2 also has high maintainability.

Further, according to the display system 2 according to the present embodiment, the indicator unit 14 includes the first board 143 on which the plurality of indicators 141 are mounted, and the first housing portion 145 that is disposed to cover at least the first board 143. The meter display unit 12 includes the second board 123 on which the meter display portion 121 is mounted, and the second housing portion 126 that is disposed to cover at least the second board 123. The infotainment display unit 13 includes the third board 134 on which the infotainment display portion 131 is mounted, and the third housing portion 136 that is disposed to cover at least the third board 134. Since each of these units has a separate board and a separate housing portion, the unit is an independent and separate unit. Since the display system 2 is constructed by freely combining these units, the display system has a high degree of freedom for design and high maintainability.

Further, according to the display system 2 according to the present embodiment, the first signal cable 15 is an LIN communication cable. Therefore, the cable required for communication between the meter display unit 12 and the indicator unit 14 can be simplified, for example, as compared with a case where the first signal cable 15 is a CAN communication cable.

Further, according to the display system 2 according to the present embodiment, the indicator unit 14 includes the indicator controller 142 that is configured to control the plurality of indicators 141. Therefore, the meter display unit 12 needs to have a function of controlling the meter display portion 121 but does not need to have a function of controlling the plurality of indicators. Therefore, independence of the meter display unit 12 and the indicator unit 14 can be enhanced.

In the present embodiment, the indicator unit 14 includes the indicator controller 142. However, the indicator unit 14 does not need to be provided with the indicator controller 142. In this case, the meter display controller 122 of the meter display unit 12 is configured not only to control the operation of the meter display portion 121 but also to control the plurality of indicators 141. For example, ON/OFF control of the plurality of indicators 141 is performed by the meter display controller 122 that determines the current value to be supplied to the indicator unit 14. In this case, the indicator unit 14 does not need to have a function of controlling the plurality of indicators 141. Therefore, the configuration of the indicator unit 14 can be further simplified.

In the present embodiment, the first signal cable 15 is an LIN communication cable. However, the first signal cable 15 may be, for example, a CAN communication cable or the like.

### REFERENCE SIGNS LIST

1: Straddled vehicle (vehicle)
2: Display system
3: Handle switch
4: Vehicle control unit
5: Vehicle speed sensor
6: Drive source
7: Drive source rotation speed sensor
8: Cooling water temperature sensor
9: Fuel gauge sensor
12: Meter display unit
13: Infotainment display unit
14: Indicator unit
15: First signal cable
16: Second signal cable
30: Portable terminal
40: Wireless base station
50: IP network
60: External server
121: Meter display portion
122: Meter display controller
123: Second board
124: First adaptor
125: Second adaptor
126: Second housing portion
126a: Non-transparent portion
126b: Transparent portion
131: Infotainment display portion
132: Communication portion
133: Infotainment display controller
134: Third board
135: Third adaptor
136: Third housing portion
136a: Non-transparent portion
136b: Transparent portion
141: Indicator
141 a: Light emitting portion
141b: Display panel
142: Indicator controller
143: First board
144: Fourth adaptor
145: First housing portion
145a: Non-transparent portion
145b: Transparent portion
210: Windscreen
220: Handle
225: Brake lever
226: Left handle
227: Right handle
228: Brake lever
229: Throttle grip
230: Main switch key
232: Left side mirror
233: Right side mirror

## Claims

1. A display system (2) to be mounted on a straddled vehicle (1) and communicably connectable to a portable terminal (30), the display system (2) comprising:
an indicator unit (14) comprising a plurality of indicators (141) indicating a state of the vehicle (1);
a meter display unit (12) configured to display vehicle traveling information relevant to a traveling state of the vehicle (1); and
an infotainment display unit (13) communicably connectable to the portable terminal (30) and configured to display infotainment information transmitted from the portable terminal (30), wherein
the indicator unit (14) comprises a first board (143) on which at least the plurality of indicators (141) are mounted; and
the meter display unit (12) comprises a meter display portion (121) configured to display the vehicle traveling information, and a second board (123) on which at least the meter display portion (121) is mounted; and the infotainment display unit (13) comprises an infotainment display portion (131) configured to display infotainment information, and a third board (134) on which at least the infotainment display portion (131) is mounted, **characterized in that**
the indicator unit (14) comprises a first housing portion (145) covering at least the first board (143), the meter display unit (12) comprises a second housing portion (126) covering at least the second board (123), and the infotainment display unit (13) comprises a third housing portion (136) covering at least the third board (134), so that each of the indicator unit (14), the meter display unit (12) and the infotainment display unit (13) is an independent and separate unit, the indicator unit (14) and the meter display unit (12) are physically connected to each other through a first signal cable (15); and
the meter display unit (12) and the infotainment display unit (13) are physically connected to each other through a second signal cable (16).

2. The display system (2) according to claim 1, **characterized in that** the first signal cable (15) is an LIN communication cable.

3. The display system (2) according to claim 1, **characterized in that** the first signal cable (15) is a CAN communication cable.

4. The display system (2) according to any one of claims 1 to 3, **characterized in that** the indicator unit (14) further comprises an indicator controller (142) configured to control the plurality of indicators (141).

5. The display system (2) according to any one of claims 1 to 3, **characterized in that** the meter display unit (12) comprises:
a meter display portion (121); and
a meter display controller (122) configured to control operation of the meter display portion (121) and the plurality of indicators (141).

6. A straddled vehicle (1) having a display system (2) according to at least one of the claims 1 to 5 mounted thereon.

7. A display means comprising a display system (2) according to at least one of the claims 1 to 5 and a portable terminal (30), the display system (2) is communicably connectable to the portable terminal (30).

## Patentansprüche

1. Ein Anzeigesystem (2), das an einem gespreizten Fahrzeug (1) zu montieren ist und mit einem tragbaren Endgerät (30) kommunikationsfähig verbindbar ist, das Anzeigesystem (2) umfasst:
eine Indikatoreinheit (14), die eine Mehrzahl von Indikatoren (141) umfasst, die einen Zustand des Fahrzeugs (1) angeben;
eine Instrument-Anzeigeeinheit (12), die konfiguriert ist, um Fahrzeugfahrinformationen anzuzeigen, die für einen Fahrzustand des Fahrzeugs (1) relevant sind; und
eine Infotainment-Anzeigeeinheit (13), die kommunikativ mit dem tragbaren Endgerät (30) verbindbar ist und konfiguriert ist, um Infotainment-Informationen, die von dem tragbaren Endgerät (30) übertragen sind, anzuzeigen, wobei
die Indikatoreinheit (14) eine erste Platine (143), auf der zumindest die Mehrzahl von Indikatoren (141) angebracht ist, umfasst; und
die Instrument-Anzeigeeinheit (12) einen Instrument-Anzeigeabschnitt (121), der konfiguriert ist, um die Fahrzeugfahrinformationen anzuzeigen, und eine zweite Platine (123), auf der zumindest der Instrument-Anzeigeabschnitt (121) angebracht ist, umfasst; und die Infotainment-Anzeigeeinheit (13) einen Infotainment-Anzeigeabschnitt (131), der konfiguriert ist, um Infotainment-Informationen anzuzeigen, und eine dritte Platine (134), auf der zumindest der Infotainment-Anzeigeabschnitt (131) angebracht ist, umfasst, **dadurch gekennzeichnet, dass**
die Indikatoreinheit (14) einen ersten Gehäuseabschnitt (145) umfasst, der zumindest die erste Platine (143) abdeckt, die Instrument-Anzeigeeinheit (12) einen zweiten Gehäuseabschnitt (126) umfasst, der zumindest die zweite Platine (123) abdeckt, und die Infotainment-Anzeigeeinheit (13) einen dritten Gehäuseabschnitt (136) umfasst, der zumindest die dritte Platine (134) abdeckt, so dass jede von der Indikatoreinheit (14), der Instrument-Anzeigeeinheit (12) und der Infotainment-Anzeigeeinheit (13) eine unabhängige und getrennte Einheit ist, die Indikatoreinheit (14) und die Instrument-Anzeigeeinheit (12) sind physikalisch miteinander durch ein erstes Signalkabel (15) verbunden; und
die Instrument-Anzeigeeinheit (12) und die Infotainment-Anzeigeeinheit (13) sind physisch durch ein zweites Signalkabel (16) miteinander verbunden.

2. Das Anzeigesystem (2) gemäß Anspruch 1, **dadurch gekennzeichnet, dass** das erste Signalkabel (15) ein LIN-Kommunikationskabel ist.

3. Das Anzeigesystem (2) gemäß Anspruch 1, **dadurch gekennzeichnet, dass** das erste Signalkabel (15) ein CAN-Kommunikationskabel ist.

4. Das Anzeigesystem (2) gemäß irgendeinem der Ansprüche 1 bis 3, **dadurch gekennzeichnet, dass** die Indikatoreinheit (14) weiterhin eine Indikatorsteuerung (142) umfasst, die konfiguriert ist, um die Mehrzahl von Indikatoren (141) zu steuern.

5. Das Anzeigesystem (2) gemäß irgendeinem der Ansprüche 1 bis 3, **dadurch gekennzeichnet, dass** die Instrument-Anzeigeeinheit (12) umfasst:
einen Instrument-Anzeigeabschnitt (121); und
eine Instrument-Anzeigesteuerung (122), die konfiguriert ist, um den Betrieb des Instrument-Anzeigeabschnitts (121) und der Mehrzahl von Indikatoren (141) zu steuern.

6. Ein Spreiz-Sitz-Fahrzeug (1), das Anzeigesystem (2) gemäß zumindest einem der Ansprüche 1 bis 5 daran montiert hat.

7. Eine Anzeigeeinrichtung, die ein Anzeigesystem (2) gemäß zumindest einem der Ansprüche 1 bis 5 und einem tragbaren Endgerät (30), das Anzeigesystem (2) ist mit dem tragbaren Endgerät (30) kommunikativ verbindbar.

## Revendications

1. Système d'affichage (2) destiné à être monté sur un véhicule à selle (1) et pouvant être connecté en communication à un terminal portable (30), le système d'affichage (2) comprenant :
une unité d'indication (14) comprenant une pluralité d'indicateurs (141) indiquant un état du véhicule (1) ;
une unité d'affichage de compteur (12) configurée pour afficher des informations de déplacement de véhicule concernant un état de déplacement du véhicule (1) ; et
une unité d'affichage d'infodivertissement (13) pouvant être connectée en communication au terminal portable (30) et configurée pour afficher des informations d'infodivertissement transmises depuis le terminal portable (30), dans lequel
l'unité d'indication (14) comprend une première carte (143) sur laquelle au moins la pluralité d'indicateurs (141) sont montés ; et
l'unité d'affichage de compteur (12) comprend une partie d'affichage de compteur (121) configurée pour afficher les informations de déplacement de véhicule, et une deuxième carte (123) sur laquelle est montée au moins la partie d'affichage de compteur (121); et l'unité d'affichage d'infodivertissement (13) comprend une partie d'affichage d'infodivertissement (131) configurée pour afficher des informations d'infodivertissement, et une troisième carte (134) sur laquelle est montée au moins la partie d'affichage d'infodivertissement (131), **caractérisé en ce que**
l'unité d'indication (14) comprend une première partie de boîtier (145) couvrant au moins la première carte (143), l'unité d'affichage de compteur (12) comprend une deuxième partie de boîtier (126) couvrant au moins la deuxième carte (123), et l'unité d'affichage d'infodivertissement (13) comprend une troisième partie de boîtier (136) couvrant au moins la troisième carte (134), de sorte que chacune parmi l'unité d'indication (14), l'unité d'affichage de compteur (12) et l'unité d'affichage d'infodivertissement (13) soit une unité indépendante et séparée, l'unité d'indication (14) et l'unité d'affichage de compteur (12) sont physiquement connectées l'une à l'autre par un premier câble de signal (15) ; et
l'unité d'affichage de compteur (12) et l'unité d'affichage d'infodivertissement (13) sont physiquement connectées l'une à l'autre par un deuxième câble de signal (16).

2. Système d'affichage (2) selon la revendication 1, **caractérisé en ce que** le premier câble de signal (15) est un câble de communication LIN.

3. Système d'affichage (2) selon la revendication 1, **caractérisé en ce que** le premier câble de signal (15) est un câble de communication CAN.

4. Système d'affichage (2) selon l'une quelconque des revendications 1 à 3, **caractérisé en ce que** l'unité d'indication (14) comprend en outre un dispositif de commande d'indicateur (142) configuré pour commander la pluralité d'indicateurs (141).

5. Système d'affichage (2) selon l'une quelconque des revendications 1 à 3, **caractérisé en ce que** l'unité d'affichage de compteur (12) comprend :
une partie d'affichage de compteur (121) ; et
un dispositif de commande d'affichage de compteur (122) configuré pour commander le fonctionnement de la partie d'affichage de compteur (121) et de la pluralité d'indicateurs (141).

6. Véhicule à selle (1) sur lequel est monté un système d'affichage (2) selon au moins l'une des revendications 1 à 5.

7. Moyen d'affichage comprenant un système d'affichage (2) selon au moins l'une des revendications 1 à 5 et un terminal portable (30), le système d'affichage (2) peut être connecté en communication au terminal portable (30).
